# EUROPEAN PATENT SPECIFICATION

(11) **EP 1 855 964 B1**
(45) Date of publication and mention of the grant of the patent: **17.02.2016**
(21) Application number: 05722200.2
(22) Date of filing: 11.03.2005
(51) Int. Cl.: B65F 1/06, B07C 5/34, G01V 15/00

(54) **ARRANGEMENT AND METHOD FOR SORTING OF WASTE CONTAINERS**
ANORDNUNG UND VERFAHREN ZUM SORTIEREN VON ABFALLBEHÄLTERN
DISPOSITIF ET PROCEDE DE TRI DE CONTENANTS A DECHETS

(43) Date of publication of application: 21.11.2007
(73) Proprietor: Envac Optibag AB, 595 24 Mjölby (SE)
(72) Inventor: TORÄNG, Christian, S-587 37 Linköping (SE); ÖJDEMARK, Christer, 582 26 LINKÖPING (SE); HOLMERTZ, Stefan, S-592 41 Vadstena (SE)
(74) Representative: Awapatent AB
(86) International application number: PCT/SE2005/000353
(87) International publication number: WO 2006/096101

(56) References cited:
- EP-A2- 0 554 207
- EP-A2- 1 041 504
- EP-A2- 1 041 505
- WO-A1-2004/090799
- DE-U1- 20 105 939
- FR-A1- 2 806 502
- US-A- 3 438 489
- US-A- 3 750 167
- US-A- 5 100 005
- US-A1- 2004 133 484
- DATABASE WPI Week 200413, Derwent Publications Ltd., London, GB; Class P43, AN 2004-126761, XP003017548 & JP 2004 018201 A (TOKYO SHIBAURA ELECTRIC CO) 22 January 2004

## Description

### Field of the Invention

The present invention relates to an arrangement and a method for sorting of waste containers.

### Background Art

Arrangements for sorting of waste containers in the form of bags are known from, for instance, SE8901046-6, WO93/06945A1 and EP0759816B1. Methods for sorting of waste are known from, for instance, WO03/039773A1 and WO2004/050264A1.

These prior-art arrangements sort waste containers into two or more fractions. In some of the documents, this is done based on the colours of the waste containers. For example, black waste containers can be sorted into a biodegradable fraction whereas white waste containers are sorted into a combustible fraction. Waste containers with different colours can be used for sorting into respective fractions for, for example, recyclable rigid plastic, metal, glass etc.

A drawback in prior-art arrangements for sorting of waste containers is that objects, such as newspapers, empty bags, sheets of plastic etc, can get onto the conveyor belt that transports the waste containers during sorting and, thus, wholly or partly block the sensor which records the colours of the waste containers. Also dirt on the waste containers can make it difficult for the sensor to identify them. This may result in incorrect sorting of the waste containers, with the ensuing manual correction work and/or reduced recyclability.

US2004/0133484A1 discloses a sorting arrangement according to the preamble of claim 1 for sorting of containers or other articles provided with RFID tags. This arrangement functions, however, only in situations where discrete containers, which are each provided with an RFID tag, are to be sorted, and is therefore not suited for sorting of domestic waste, which may contain disintegrated and/or sticky material.

WO2004/090799A1 discloses a system for sorting of recyclable products, which are each provided with an RFID tag. Also this system requires the articles that are to be sorted to be provided with an RFID tag each.

JP 2004018201 A discloses a system for discrimination of refuse, wherein an electronic information recording element is provided integrally at the refuse.

### Summary of the Invention

An object thus is to provide a waste container as well as an arrangement and a method for sorting of such waste containers, which wholly or partly eliminate the drawbacks of prior-art technique and which allow an improved sorting quality, especially in sorting of domestic waste.

The invention is defined by the independent claims. Embodiments are evident from the dependent claims and from the following description and the accompanying drawings.

With a second sensor, the sorting quality can be improved by more information being made available before the decision about how each waste container is to be sorted. Moreover, the sensitivity to incorrect reading, or no reading, of a tag readable based on radio frequencies is reduced since also information about the colour or shade of the waste container can be used.

### Brief Description of the Drawings

The waste container, the sorting arrangement and the method will now be described in more detail with reference to the accompanying schematic drawings.
Fig. 1 shows a waste container.
Fig. 2 shows a sorting arrangement according to one embodiment of the invention.
Fig. 3 shows part of a sorting method according to one embodiment of the invention.

### Description of Embodiments

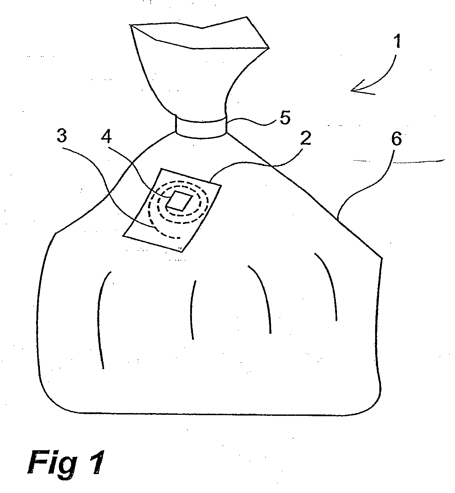

Fig. 1 shows a waste container 1, which consists of a thin-walled bag 6 of a flexible material, such as plastic, paper, metal or a combination thereof. The bag can have a closure 5 to prevent waste in the bag 6 from being spread outside the bag. Moreover, the bag is provided with means 2 which is readable based on radio frequencies, such as an RFID tag or the like. Such a tag may comprise a chip 4 and an aerial coil 3. The chip 4 may comprise a processor and a data memory (not shown). There are currently different types of RFID tags. Two main types are referred to as active and passive RFID tags, which differ from each other by the active RFID tag comprising a current source whereas the passive RFID tag receives its energy from a magnetic field inducing a current in the aerial coil.

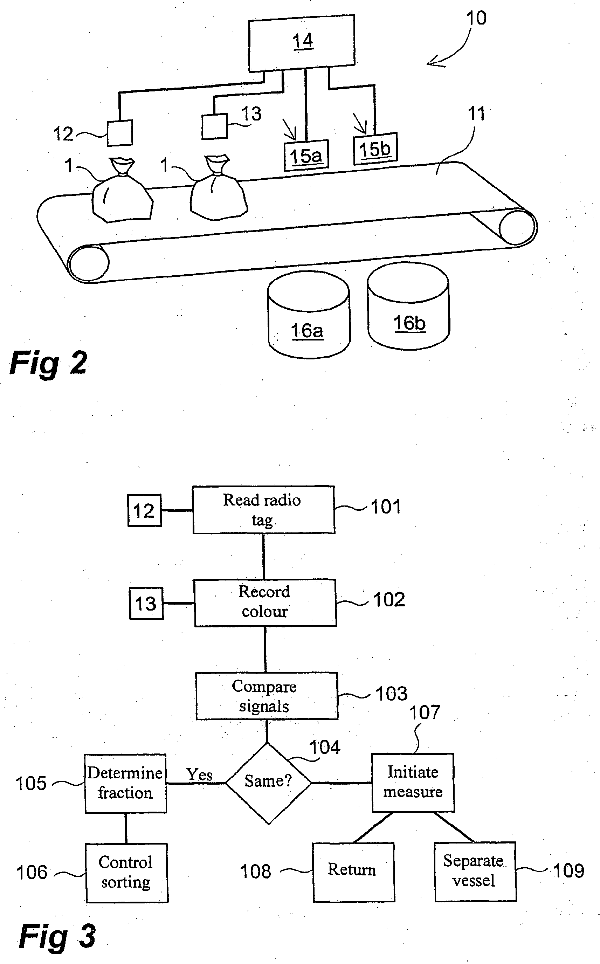

When such a passive RFID tag 2 is subjected to a predetermined magnetic field, a current is induced in the aerial coil 3, which current is sufficient to drive the chip 4. As the chip 4 is driven, the processor retrieves information from the data memory and sends via the aerial coil 3 a response signal that corresponds to said information. According to the invention, the information comprises at least information about the type of waste for which the waste container 1 is intended. The emitted response signal may be perceived by a sensor 12 (Fig. 2) for reading based on radio frequencies. The sensor 12 can also be arranged to generate the magnetic field.

The tag 2 can be provided in the form of a very thin unit, in which the aerial coil 3 and the chip 4 are arranged on a carrier in the form of a film of plastic or paper, which can be provided with an adhesive. Tags of this type are known and disclosed, for example, in US-6,265,977 and US-6,107,920. The tag can then by means of the adhesive be applied to the waste container.

It will be appreciated that the vital parts of the tag, i.e. the aerial loop and the chip, can be arranged directly on or in the waste container or the material of which it is made, an additional carrier. The term "tag" is thus only to be understood to comprise the parts that are required for the identification of the waste container based on radio frequencies to be possible.

According to one embodiment, the RFID circuit can wholly or partly be printed directly on the waste container by means of polymer electronics/paper electronics, for instance of the type discussed in US-2004/0256644.

According to one embodiment, a set of waste containers comprising at least two different waste containers is provided, which are intended for different types of waste and, thus, differ from each other with regard to the information that is available in the data memory of the tag. In one variant of this embodiment, the two different waste containers differ from each other also with regard to the colour or shade of the waste containers. The colour or the shade can thus represent the type of waste for which the respective containers are intended. This colour coding of the waste containers can be used by the users as well as by the sorting arrangement in order to distinguish different types of waste.

Fig. 2 is a simplified view of a sorting arrangement 10 for waste containers 1. The sorting arrangement comprises a conveyor 11, in this case a conveyor belt, on which waste containers 1 to be sorted are transported at the left end of the conveyor shown in the Figure. A first sensor 12 is arranged for reading, based on radio frequencies, of tags 2 arranged on the waste containers 1 and readable based on radio frequencies, as described above. When reading the tag 2 of a waste container, the sensor 12 receives a signal corresponding to at least part of the information available in the data memory of the tag 2. The signal is sent to a control unit 14.

The waste container can also pass a second sensor 13, which can be a sensor of the type which is disclosed in SE8901046-6, WO9306945A1 and EP0759816B1 and which identifies a colour or a shade of the passing waste container, a second signal representing said colour or shade being sent to the control unit 14. The first and second sensors 12, 13 can be arranged in any relative order. Thus it need not be important which sensor records the waste container 1 first.

Sorting means 15a, 15b are arranged to selectively strike or push a waste container 1 away from the conveyor 11, so that the waste container gets into a collecting vessel 16a, 16b. The control unit 14 can be arranged to produce control signals to the sorting means 15a, 15b. based on the time of arrival of the signals from the sensors 12, 13 and knowledge of the transport speed of the conveyor. This results in sorting of the waste container in two collecting vessels 16a, 16b, which, for example, can be intended to contain biodegradable and combustible waste respectively.

It will be appreciated that the sorting arrangement, the conveyor and the sorting means can be designed in various ways. Conveyors of different types can be used, such as belt conveyors, screw conveyors, overhead conveyors, chain conveyors etc. Also pipes in which the waste containers are made to be transported under the action of excess pressure, negative pressure and/or gravity may constitute conveyors. Also the number of collecting vessels can be varied according to the number of sorting fractions that are desired.

Also the sorting means can be arbitrarily designed.

Fig. 3 illustrates a method in sorting of waste containers. The method comprises recording 101, by reading, based on radio frequencies, of a tag 2 arranged on a waste container 1 and readable based on radio frequencies. The method further comprises, optionally, recording 102 of a colour or a shade of the waste container 1. Subsequently the signals received from the first and second recordings are compared 103, 104. If the signals correspond with each other, i.e. indicate the same type of waste, it is determined 105 to which fraction the waste container 1 is to be sorted. Then a control signal is sent 106 to the sorting means 15a, 15b.

If the signals do not correspond with each other, a measure is initiated 107 in response thereto. Such a measure can be to return 108 the waste container to be sorted once more. Another measure may involve transporting the waste container to a separate vessel 109 for, for instance, manual sorting, controlled deposition or the like.

It will be appreciated that the sorting arrangement 10 can be programmed so that output data from one of the sensors 12, 13 have greater weight, allowing these data to be decisive, should the signals in the comparison 103 not correspond with each other.

It will also be appreciated that the relative order in which the sensors 12, 13 record the waste container 1 is optional, and that the reading can take place sequentially or simultaneously.

The memory of the tag 2 may also contain further information, such as information as basic data for debiting (optionally in combination with a weighing function in the conveyor 11 or in the collecting vessels 16a, 16b) of waste handling costs or information making it possible to trace the contents of the waste container to a given household or a given retailer of waste containers.

According to an alternative embodiment, a first sorting into at least two different fractions can be carried out based on colour or RFID. Subsequently a second sorting of at least one of the two fractions based on colour or RFID takes place. According to a first example, the first sorting can take place based on colour or shade of colour, after which one of the two fractions is sorted based on RFID. According to a second example, the first sorting takes place based on RFID and the second sorting based on colour or shade of colour.

According to one embodiment, use is made of "positive separation" as disclosed in WO2004/050264A1, i.e. sensors 12, 13 record a colour and/or an RFID, waste containers 1 with a predetermined colour and/or RFID being separated from the conveyor 11 by the sorting means 15a, 15b, and waste containers 1 which do not have said pre-determined colour and/or RFID coming along to the end of the belt and getting into a mixed fraction or being returned for new sorting.

According to an alternative embodiment, "negative separation", as disclosed in WO03/039773A1, is used, i.e. sensors 12, 13 record a colour and/or an RFID, waste containers 1 which do not have a predetermined colour and/or a predetermined RFID being separated from the conveyor 11 by the sorting means 15a, 15b, and waste containers 1 which have said predetermined colour and/or RFID coming along to the end of the belt and getting into a mixed fraction or being returned for new sorting.

It will be appreciated that the here shown use of tags readable based on radio frequencies can be used independently or in combination with reading of colour-coded waste containers.

According to an alternative embodiment, the waste containers 1 are provided with an optically machine-readable code, which indicates the type of waste for which the respective waste containers are intended. Examples of such codes are characters (letters, numerals or the like) or patterns, such as a bar code or a position-coding pattern of the type disclosed in US-5,852,434, EP-0 578 692, EP-0 171 284 and US-2004113898. In this embodiment, the same, or a third, sensor 13 can be arranged to read the code and send this to the control unit 14 for controlling the sorting means 15a, 15b in accordance with that described regarding the second sensor.

As another embodiment, it may be mentioned that the waste container, as a second property, has a fluorescent or luminescent capacity, which is recordable by the second sensor, possibly combined with a source of energy for excitation.

It will further be appreciated that even if the above embodiments are shown with reference to a sorting arrangement with two sorting means 15a, 15b, the principles described above are applicable to sorting arrangements of any size, with any number of sorting means and with sorting into any number of collecting vessels.

It will also be appreciated that it is possible to provide an arrangement and a method for sorting of waste containers using the RFID sensor only, i.e. without the second sensor for colour or shade.

According to another embodiment, it is possible to use RFID tags that are also printable. In such an embodiment, it is possible to print, at a weighing station comprising a first sensor/printer, information in the RFID tag, for instance regarding the weight of the waste container, and at a subsequent station, possibly in connection with sorting, i.e. in reading by means of the first sensor 12, read this information and control the sorting means 15a, 15b based also on this information. Such weighing can take place when supplying the waste container to a waste handling system, for instance adjacent to a refuse chute; when collecting the waste container to be transported to a sorting plant, when the waste container arrives at the sorting plant and/or in direct connection with sorting.

## Claims

1. An arrangement (10) for sorting a plurality of waste containers (1) designed to receive a quantity of waste, and provided with means (2) readable based on radio frequencies, comprising:
a conveyor (11) arranged to transport the waste containers (1),
a first sensor (12) for reading based on radio frequencies, arranged to emit a signal when a waste container (1) transported on the conveyor (11) is recorded by the first sensor (12), and
means (15a, 15b) for sorting the waste containers (1) based on the signal from the first sensor (12),
wherein the first sensor (12) is arranged to read said means (2) readable based on radio frequencies and arranged on the waste containers (1),
**characterised in that**
the arrangement comprises a second sensor (13) for detecting a second property of the waste container (1) and for emitting a second signal in response to the second sensor (13) recording a waste container (1) with said second property transported on the conveyor (11), and
said sorting means (15a, 15b) is arranged to sort the waste containers (1) based also on said second signal.

2. The arrangement as claimed in claim 1, wherein the first sensor (12) is an RFID sensor.

3. The arrangement as claimed in claim 1 or 2, wherein the second property is a colour, a shade of colour, one or more characters, a pattern and/or a tactile mark.

4. A system for sorting of waste, said system comprising
an arrangement as claimed in any one of claims 1-3; and
at least two waste containers (1),
which are designed to be disposable and to receive a quantity of waste,
which each are provided with said means (2) readable based on radio frequencies, and
which differ from each other with regard to a property which can be recorded by a sensor (12, 13) and by a user, said property at least partly representing information derivable from the means (2) which is readable based on radio frequencies.

5. The system as claimed in claim 4, wherein the means (2) readable based on radio frequencies comprises an RFID means.

6. The system as claimed in claim 4 or 5, wherein the means (2) is attached to the waste container (1) by means of an adhesive, such as glue or double-adhesive tape.

7. The system as claimed in claim 1 or 2, wherein the means (2) is at least partly attached to the waste container in the form of polymer electronics.

8. The system as claimed in any one of claims 4-7, wherein the waste container (1) essentially consists of a bag (6) or box of polymer material, paper, metal, plastic-coated paper, metal-coated plastic or metal-coated paper.

9. The system as claimed in any one of claims 4-8, wherein the waste container essentially consists of a thin-walled bag (6) of flexible material.

10. A method for sorting of waste, comprising:
providing a plurality of waste containers (1) designed to receive a quantity of waste, and provided with means (2) readable based on radio frequencies , each of said waste containers containing waste,
recording (101) by means of a first sensor (12) said waste containers (1) when transported on a conveyor, said recording being achieved by reading, based on radio frequencies, of said means (2) readable based on radio frequencies,
recording (102) by means of a second sensor (13) a second property of said waste containers (1) transported on the conveyor,
controlling (106), based on the recording based on radio frequencies and on the recording of said second property, means (15a, 15b) for sorting said waste containers (1)

11. The method as claimed in claim 10, wherein the second sensor records a colour or a shade of colour in the visible spectrum, one or more characters, a pattern and/ or a tactile mark.

12. The method as claimed in claim 10 or 11, wherein one of said waste containers (1) is directed to a sorting container (16a, 16b) based only on the signal from the first sensor (12) or based only on the signal from the second sensor (13).

13. The method as claimed in claim 10 or 11, wherein one of said waste containers (1) is directed to a sorting container (16a, 16b) if, and only if, the signals from the first sensor (12) and from the second sensor (13) correspond with each other with regard to which sorting container (16a, 16b) the waste container (1) is to be directed to.

14. The method as claimed in claim 10 or 11, wherein, if the signals from the first sensor (12) and from the second sensor (13) do not correspond with each other, the waste container (1) is returned for new reading by at least one of said first and second sensors (12, 13).

15. The method as claimed in claim 10 or 11, wherein, if the signals from the first sensor (12) and from the second sensor (13) do not correspond with each other, the waste container is directed to a sorting container for unsorted waste.

16. The method as claimed in any one of claims 10-15, wherein waste containers that do not give rise to a valid signal from said first sensor (12) are removed from the conveyor (11).

17. The method as claimed in any one of claims 10-15, wherein waste containers that do not give rise to a valid signal from at least one of said first and second sensors (12, 13) are removed from the conveyor (11).

## Patentansprüche

1. Anordnung (10) zum Sortieren mehrerer Abfallbehälter (1), die dazu ausgelegt sind eine Menge an Abfall aufzunehmen, wobei die Anordnung mit einem Mittel (2) ausgestattet ist, das basierend auf Funkfrequenzen lesbar ist, und Folgendes umfasst:
ein Förderband (11), das zum Transportieren der Abfallbehälter (1) angeordnet ist,
einen ersten Sensor (12) zum Lesen basierend auf Funkfrequenzen, der zum Ausgeben eines Signals angeordnet ist, wenn ein Abfallbehälter (1), der auf dem Förderband (11) befördert wird, von dem ersten Sensor (12) erfasst wird, und
ein Mittel (15a, 15b) zum Sortieren der Abfallbehälter (1) basierend auf dem Signal von dem ersten Sensor (12),
wobei der erste Sensor (12) zum Lesen des Mittels (2) angeordnet ist, das basierend auf Funkfrequenzen lesbar ist und auf den Abfallbehältern (1) angeordnet ist,
**dadurch gekennzeichnet, dass**
die Anordnung einen zweiten Sensor (13) zum Erfassen einer zweiten Eigenschaft des Abfallbehälters (1) und zum Ausgeben eines zweiten Signals, als Reaktion darauf, dass der zweite Sensor (13) einen Abfallbehälter (1) mit der zweiten Eigenschaft, der auf dem Förderband (11) befördert wird, erkennt, umfasst, und
das Sortiermittel (15a, 15b) so angeordnet ist, dass es die Abfallbehälter (1) ebenfalls basierend auf dem zweiten Signal sortiert.

2. Anordnung nach Anspruch 1, wobei es sich bei dem ersten Sensor (12) um einen RFID-Sensor handelt.

3. Anordnung nach Anspruch 1 oder 2, wobei es sich bei der zweiten Eigenschaft um eine Farbe, einen Farbton, ein oder mehrere Zeichen, ein Muster und/oder eine tastbare Markierung handelt.

4. System zum Sortieren von Abfall, wobei das System Folgendes umfasst:
eine Anordnung nach einem der Ansprüche 1-3; und
mindestens zwei Abfallbehälter (1),
die dazu ausgelegt sind, wegwerfbar zu sein und eine Menge an Abfall aufzunehmen,
die jeweils mit dem Mittel (2), das basierend auf Funkfrequenzen lesbar ist, ausgestattet sind, und
die sich bezüglich einer Eigenschaft voneinander unterscheiden, die von einem Sensor (12, 13) und von einem Benutzer erfasst werden kann, wobei die Eigenschaft zumindest teilweise Informationen darstellt, die von dem Mittel (2), das basierend auf Funkfrequenzen lesbar ist, ableitbar sind.

5. System nach Anspruch 4, wobei das Mittel (2), das basierend auf Funkfrequenzen lesbar ist, ein RFID-Mittel umfasst.

6. System nach Anspruch 4 oder 5, wobei das Mittel (2) an dem Abfallbehälter (1) mittels eines Klebstoffs, wie Leim oder doppelseitigem Klebeband, angebracht ist.

7. System nach Anspruch 1 oder 2, wobei das Mittel (2) zumindest teilweise an dem Abfallbehälter in der Form von Polymerelektronik angebracht ist.

8. System nach einem der Ansprüche 4-7, wobei der Abfallbehälter (1) im Wesentlichen aus einem Beutel (6) oder einer Schachtel aus Polymermaterial, Papier, Metall, mit Kunststoff beschichtetem Papier, mit Metall beschichtetem Kunststoff oder mit Metall beschichtetem Papier besteht.

9. System nach einem der Ansprüche 4-8, wobei der Abfallbehälter im Wesentlichen aus einem dünnwandigen Beutel (6) aus nachgiebigem Material besteht.

10. Verfahren zum Sortieren von Abfall, das Folgendes umfasst:
Bereitstellen mehrerer Abfallbehälter (1), die dazu ausgelegt sind eine Menge an Abfall aufzunehmen und mit einem Mittel (2), das basierend auf Funkfrequenzen lesbar ist, ausgestattet sind, wobei jeder der Abfallbehälter Abfall enthält,
Erfassen (101) der Abfallbehälter (1), wenn sie auf einem Förderband befördert werden, mittels eines ersten Sensors (12), wobei das Erfassen durch das Lesen, basierend auf Funkfrequenzen, des Mittels (2), das basierend auf Funkfrequenzen lesbar ist, erzielt wird,
Erfassen (102) einer zweiten Eigenschaft der Abfallbehälter (1), die auf dem Förderband befördert werden, mittels eines zweiten Sensors (13),
Steuern (106) des Mittels (15a, 15b) zum Sortieren der Abfallbehälter (1) basierend auf dem Erfassen, das auf den Funkfrequenzen basiert, und auf dem Erfassen der zweiten Eigenschaft.

11. Verfahren nach Anspruch 10, wobei der zweite Sensor eine Farbe oder einen Farbton im sichtbaren Spektrum, ein oder mehrere Zeichen, ein Muster und/oder eine tastbare Markierung erfasst.

12. Verfahren nach Anspruch 10 oder 11, wobei einer der Abfallbehälter (1) ausschließlich basierend auf dem Signal von dem ersten Sensor (12) oder ausschließlich basierend auf dem Signal von dem zweiten Sensor (13) zu einem Sortierbehälter (16a, 16b) geleitet wird.

13. Verfahren nach Anspruch 10 oder 11, wobei einer der Abfallbehälter (1) nur dann zu einem Sortierbehälter (16a, 16b) geleitet wird, wenn die Signale von dem ersten Sensor (12) und von dem zweiten Sensor (13) dahingehend übereinstimmen, zu welchem Sortierbehälter (16a, 16b) der Abfallbehälter (1) geleitet werden soll.

14. Verfahren nach Anspruch 10 oder 11, wobei der Abfallbehälter (1) zum erneuten Lesen von mindestens einem des ersten und des zweiten Sensors (12, 13) zurückgebracht wird, wenn die Signale von dem ersten Sensor (12) und von dem zweiten Sensor (13) nicht übereinstimmen.

15. Verfahren nach Anspruch 10 oder 11, wobei der Abfallbehälter zu einem Sortierbehälter für unsortierten Abfall geleitet wird, wenn die Signale von dem ersten Sensor (12) und von dem zweiten Sensor (13) nicht übereinstimmen.

16. Verfahren nach einem der Ansprüche 10-15, wobei Abfallbehälter, die kein gültiges Signal von dem ersten Sensor (12) verursachen, vom Förderband (11) entfernt werden.

17. Verfahren nach einem der Ansprüche 10-15, wobei Abfallbehälter, die kein gültiges Signal von mindestens einem des ersten und des zweiten Sensors (12, 13) verursachen, vom Förderband (11) entfernt werden.

## Revendications

1. Dispositif (10) de tri d'une pluralité de contenants à déchets (1) conçus pour recevoir une certaine quantité de déchets et équipés de moyens (2) lisibles à partir de fréquences radio, comprenant :
un convoyeur (11) conçu pour transporter les contenants à déchets (1), un premier capteur (12) pour faire la lecture à partir de fréquences radio, conçu pour émettre un signal quand un contenant à déchets (1) transporté sur le convoyeur (11) est enregistré par le premier capteur (12), et
un moyen (15a, 15b) de tri des contenants à déchets (1) à partir du signal du premier capteur (12),
dans lequel le premier capteur (12) est conçu pour lire ledit moyen (2) lisible à partir de fréquences radio et disposé sur les contenants à déchets (1),
**caractérisé en ce que**
le dispositif comprend un second capteur (13) pour détecter une seconde propriété du contenant à déchets (1) et pour émettre un second signal en réponse au second capteur (13) enregistrant un contenant à déchets (1) présentant ladite seconde propriété et transporté sur le convoyeur (11), et
ledit moyen de tri (15a, 15b) est conçu pour trier les contenants à déchets (1) également à partir du second signal.

2. Dispositif selon la revendication 1, dans lequel le premier capteur (12) est un capteur RFID.

3. Dispositif selon la revendication 1 ou 2, dans lequel la seconde propriété et une couleur, une nuance de couleur, un ou plusieurs caractères, un motif et/ou une marque tactile.

4. Système de tri de déchets, ledit système comprenant
un dispositif selon l'une quelconque des revendications 1-3 ; et
au moins deux contenants à déchets (1) du
qui sont conçus pour être jetables et pour recevoir une certaine quantité de déchets,
qui sont chacun équipés dudit moyen (2) lisible à partir de fréquences radio et
qui diffèrent les uns des autres au niveau d'une propriété qui peut être enregistrée par un capteur (12, 13) et par un utilisateur, ladite propriété représentant au moins partiellement des informations dérivables du moyen (2) qui est lisible à partir de fréquences radio.

5. Système selon la revendication 4, dans lequel le moyen (2) lisible à partir de fréquences radio comprend un moyen RFID.

6. Système selon la revendication 4 ou 5, dans lequel le moyen (2) est fixé au contenant à déchets (1) au moyen d'un adhésif, comme de la colle ou un ruban adhésif double face.

7. Système selon la revendication 1 ou 2, dans lequel le moyen (2) est au moins partiellement fixé au contenant à déchets sous la forme d'éléments électroniques en polymère.

8. Système selon l'une quelconque des revendications 4-7, dans lequel le contenant à déchets (1) consiste substantiellement en un sac (6) ou une boîte en matériau polymère, en papier, métal, papier revêtu de plastique, plastique revêtu de métal ou papier revêtu de métal.

9. Système selon l'une quelconque des revendications 4-8, lequel le contenant et à déchets consiste substantiellement en un sac à paroi mince (6) en matériau souple.

10. Procédé de tri de déchets, comprenant :
la mise à disposition d'une pluralité de contenants à déchets (1) conçus pour recevoir une certaine quantité de déchets et équipés de moyens (2) lisibles à partir de fréquences radio, chacun desdits contenants à déchets contenant des déch de ets,
l'enregistrement (101) à l'aide d'un premier capteur (12) desdits contenants à déchets (1) en cours de transport sur un convoyeur, ledit enregistrement étant juste effectué en lisant, à partir de fréquences radio, lesdits moyens lisibles (2) à partir de fréquences radio,
l'enregistrement (102) à l'aide d'un second capteur (13) d'une seconde propriété desdits contenants à déchets (1) transportés sur le convoyeur,
la commande (106), à partir de l'enregistrement basé sur les fréquences radio et sur l'enregistrement de ladite seconde propriété, je du moyen (15a,15b) de tri desdits contenants à déchets (1).

11. Procédé selon la revendication 10, dans lequel le second capteur enregistre une couleur ou une nuance de couleur dans le spectre visible, un ou plusieurs caractères, un motif et/ou une marque tactile.

12. Procédé selon la revendication 10 ou 11, dans lequel un desdits contenants à déchets (1) est dirigé vers un contenant de tri (16a, 16b) à partir du signal du premier capteur (12) ou à partir du signal du second capteur (13).

13. Procédé selon la revendication 10 ou 11, dans lequel un desdits contenants à déchets (1) est dirigé vers un contenant de tri (16a, 16b) si, et seulement si, les signaux du premier capteur (12) et du second capteur (13) se correspondent mutuellement au niveau du fait de savoir vers lequel contenant de tri (16a, 16b) le contenant la à déchets (1) doit être dirigé.

14. Procédé selon la revendication 10 ou 11, dans lequel, si, les signaux du premier capteur (12) et du second capteur (13) ne se correspondent pas mutuellement, le contenant à déchets (1) est renvoyé pour nouvelle lecture par au moins un desdits premier et second capteurs (12, 13).

15. Procédé selon la revendication 10 ou 11, dans lequel, si les signaux du premier capteur (12) et du second capteur (13) ne se correspondent pas mutuellement, le contenant à déchets est dirigé vers un contenant de tri destiné aux déchets non triés.

16. Procédé selon l'une quelconque des revendications 10-15, dans lequel les contenants à déchets qui ne donnent pas lieu à un signal valable dudit premier capteur (12) sont retirés du convoyeur (11).

17. Procédé selon l'une quelconque des revendications 10-15, dans lequel les contenants à déchets qui ne donnent pas lieu à un signal valable d'au moins un sur lesdits premier et second capteur (12, 13) sont retirés du convoyeur (11).
